# EUROPEAN PATENT APPLICATION

(11) **EP 1 350 557 A1**
(43) Date of publication of application: **08.10.2003**
(21) Application number: 02290809.9
(22) Date of filing: 29.03.2002
(51) Int. Cl.: B01J 2/10

(54) **Apparatus and method for wet granulating**

(71) Applicant: Warner-Lambert Company LLC, Morris Plains, New Jersey 07950 (US)
(72) Inventor: Camara, Anne-Laure, 75016 Paris (FR); Lecointre, Ludovic, 94170 Le Perreux (FR)
(74) Representative: Hirsch, Denise

(57) **Abstract**

An apparatus (10; 100) for wet granulating comprising a vessel (12; 112) for holding a material to be granulated, means for agitating (16; 116) the material and a fluid supply means (32; 132) having an outlet (40; 140) for introducing fluid into the vessel (12; 112), the outlet (40; 140) having a size such that, at a flow rate of fluid suitable for granulating the material, fluid emerges from the outlet (40; 140) substantially in the form of a jet.

## Description

The present invention relates to an apparatus and method for wet granulating and to an injector apparatus therefor. It relates more particularly, but not exclusively, to such an apparatus and method for use in the pharmaceutical industry. In one aspect the apparatus and method is of the high shear variety used in the development stages of a new drug.

Whilst a new drug is being developed, research is also carried out into the necessary formulation required to carry and dispense the drug. The formulation contains active ingredients. In addition to active ingredients, formulations are complex mixtures of diluents, binders, disintegrants, surface active agents, glidants, lubricants, colorants, coating substances, surfactants and many other raw materials that impart different properties to the final solid dosage product. The formulations can be made into saleable form in a number of ways. For example, the formulation can be dry compacted into tablets or used to fill capsules and sachets. However, the flow properties of these formulations make such tasks difficult because of the very small nature of the particles and their "dusty" nature. To overcome this, one solution has been to granulate the particles.

Granulation is used in the pharmaceutical industry to agglomerate the small particles of the formulation into larger particles. This makes handling of the formulation easier, in particular for forming tablets or filling capsules and sachets by improving flow properties. One particular form of granulation is wet granulation where fluid, very frequently water, is added to the formulation to react with a binder to help particles agglomerate.

When researching a formulation for a new active pharmaceutical ingredient (API), a very small quantity of the active ingredient is available to the researcher due to the high cost and slow time taken to produce the new API. Accordingly, it is necessary to extract as much information as possible from this small sample by using the smallest experimental formulation possible that will provide meaningful results for the purposes of scaling up the laboratory work to industrial production.

Another problem with present techniques from laboratory scale up to industrial scale is obtaining a homogeneous formulation after granulation, both in the sense of particle size and in terms of distribution of the ingredients of the formulation. Present apparatus and methods tend to cause the formulation to agglomerate too quickly resulting in a "lumpy" formulation in which the ingredients are not uniformly distributed. This problem can be particularly acute on the laboratory scale where the addition of fluid must be carried out very carefully. Furthermore, the flow rate of the fluid must not be so high as to cause local over-wetting, but should be high enough to achieve satisfactory granulation. Previously, it has been difficult to achieve the necessary balance in the laboratory.

A small scale wet granulator, particularly suited to the research carried out in the pharmaceutical laboratory has been developed by Pro-C-epT N.V. of Zelzate, Belgium and sold under the trade mark MI-PRO (see **www.pro-c-ept.com).** This granulator allows very small batches, typically 20-100g, of formulation to be tested. To granulate, the formulation fluid is gradually added to the formulation whilst it is being mixed by an impeller. Typically 5-25% by weight of water is added to the formulation during the course of granulation. Adding the water too fast can cause agglomeration to occur too quickly, resulting in undesirably large particles dispersed between particles that have not agglomerated at all. Due to the very small nature of the sample and the fact that only small total quantity of water is required, the water must be added carefully to the formulation. Typically this has been done using an automated "drop-by-drop" method from a tube passing into the granulator above the powder. However, it has been found that this method does not work satisfactorily and still produces a non-homogenous granulate at the endpoint. One possible theory for this is that, as each drop forms at the end of the tube, formulation is blown up by the impeller and contacts and coats the drop. Once coated, the drop becomes difficult to break up and simply forms a large agglomerate.

### SUMMARY OF THE PRESENT INVENTION

It is an aim of the present invention to provide an improved apparatus and method for wet granulating particularly useful on the laboratory scale and on the pilot scale, but also up to industrial scale.

According to the present invention there is provided an apparatus for wet granulating comprising a vessel for holding a material to be granulated, means for agitating the material and a fluid supply means having an outlet for introducing fluid into the vessel, the outlet having a size such that, at a flow rate of fluid suitable for granulating the material, fluid emerges from the outlet substantially in the form of one or several jets. When viewed by the naked eye the fluid has the appearance of being substantially in the form of a jet. It has been found that granulates produced on the laboratory scale have a much improved homogeneity in terms of particle size. By continuously supplying fluid under force from the outlet the quality of the granulate is enhanced.

According to another aspect of the present invention there is provided injector apparatus for use with apparatus for wet granulating, which injector apparatus comprises means for mounting the injector apparatus on apparatus for wet granulating, and a fluid supply means having an outlet for delivering fluid into the apparatus for wet granulating, the outlet being such that, in use, at the low flow rate required to granulate the small mass of material, fluid emerges substantially in the form of a jet. With such an apparatus it is possible to adapt wet granulators to have the advantages described herein.

According to another aspect of the present invention there is provided a method of wet granulating comprising the steps of:
(1) placing a material to be granulated in a vessel;
(2) agitating the material to be granulated; and
(3) supplying fluid to the material through an outlet at the low flow rate suitable to granulate the material, the outlet being of a size such that fluid emerges substantially in the form of a jet.

Other preferred features are set out in the dependent claims to which attention is hereby directed.

### BRIEF DESCRIPTION OF THE DRAWINGS

For a better understanding of the present invention reference will now be made, by way of example, to the accompanying drawings, in which:
Fig. 1 is a schematic cross section through part of a first embodiment of an apparatus in accordance with the present invention;
Fig. 2 is a schematic cross section through part of a second embodiment of an apparatus in accordance with the present invention
Fig. 3 is a plot of couple versus time for a run on two granulators, one in accordance with the invention and one not;
Fig. 4 is a further plot of couple versus time for another run on two granulators, one in accordance with the invention and one not; and
Fig. 5 is a schematic side view of an outlet of an injector apparatus operating in accordance with the present invention and an outlet of an injector apparatus operating as a prior art granulator.

### DESCRIPTION OF THE PREFERRED EMBODIMENTS

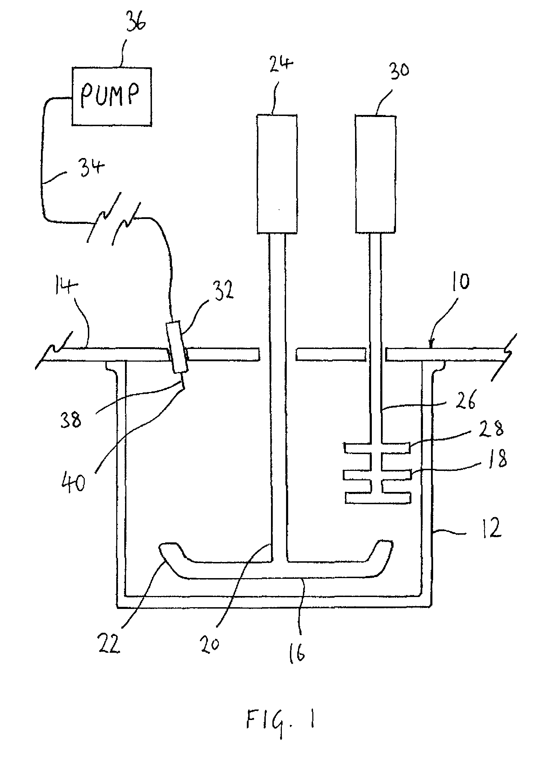

Referring to Fig. 1 a granulator generally identified by reference numeral 10 is manufactured by Pro-C-epT N.V. of Zelzate, Belgium, and sold under the trade mark MI-PRO; the operation of the granulator 10 is controlled by a computer (not shown). The granulator 10 comprises a bowl 12 constructed from glass that is releasably mounted with mounting clips (not shown) on a housing 14 only part of which is shown. The bowl 12 has an internal diameter of 80mm and an internal depth of 60mm. Extending through apertures in the housing 14 and into the bowl 12 are an impeller 16 and a chopper 18 both constructed from stainless steel. The impeller 16 has a shaft 20 provided with three blades 22 at one end and is drivingly engaged with a first top drive 24. The chopper 18 has a shaft 26 provided with six blades 28 and is drivingly engaged with a second top drive 30. The shaft 20 and axis of bowl 12 are coaxial, whereas the chopper 18 is mounted nearer the edge of the bowl so that its six blades 28 do not foul the three blades 22 of impeller 16. Both the first top drive 24 and second top drive 30 have DC variable motors to control speed.

An injector 32 is positioned to pass through an aperture in the housing 14 so that its outlet resides within the volume enclosed by the bowl 12 and housing 14. The outlet is approximately 10mm from the underside of housing 14 and may form a small angle of approximately 0-30° with the vertical. The aperture through which the injector 32 passes is approximately 20 mm from the centre of the bowl 12. A length of capillary tube 34 of 0.13mm internal diameter and 1.60mm external diameter (sold by Interchim, Paris, France under reference CH566440) is connected to injector 32 with a first high pressure liquid chromatography (HPLC) PEEK connector of 1.60mm internal diameter, which in turn is directly connected to a second HPLC PEEK connector of 0.19mm internal diameter. A 5-20mm length of 0.05mm internal diameter and 0.19mm external diameter capillary tubing 38 (sold by Thermo Finnigan under reference 00106-10502) is connected to the free end of the second HPLC PEEK connector to provide an outlet 40 into the bowl 12.

The free end of the capillary tube 34 is connected to a pump 36 via a third HPLC PEEK connector of 1.60mm internal diameter. The pump 36 is a high pressure liquid chromatography pump sold by Waters Corporation controlled by a controller (not shown) sold by Waters under reference number W600.

In use, a formulation to be granulated (see example below) is added to the bowl 12 that is then attached to the housing 14. The impeller 16 and chopper 18 are set in motion under control of the computer and simultaneously water is supplied through the pump 36 to the outlet 40. The supply of water is such that the water leaves the outlet 40 as a substantially continuous jet that does not break up into individual droplets before it impinges on and enters the formulation being agglomerated. However, over the duration of the granulation process the jet flow rate, for example in grams per minute, from the outlet 40 is the same as the drop-by-drop flow rate.

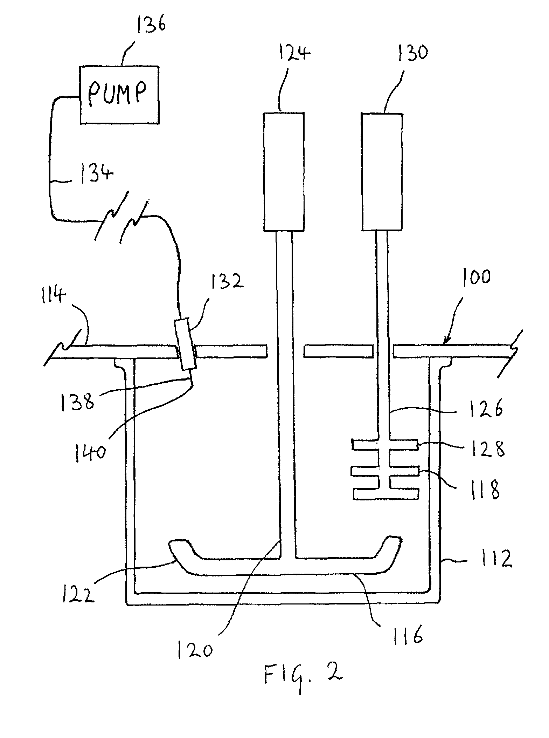

Referring to Fig. 2 a second embodiment of a granulator is generally identified by reference numeral 100. Granulator 100 is similar to the granulator 10, with like numerals indicating like parts, and is simply larger version being able to hold a greater weight of material. The bowl 112 of the granulator 100 has a diameter of 200mm and a depth of 150mm. It is used for granulating formulation having a weight range of 500 grams to 1500 grams. Since the bowl 112 is used for granulating larger weights of formulation, the flow rate necessary for this purpose is higher than that described with reference to Fig. 1. Accordingly to the capillary tube 134 and capillary tube 138 are of a larger size respectively. Typically, the capillary tube 134 has an internal diameter of 0.25mm and the capillary tube 138 has an internal diameter of 0.13mm. However, in use, water still emerges from the outlet 140 substantially in the form of a jet to improve homogeneity of the granulate.
In addition, the first capillary tube (38; 138) may have an internal diameter of between approximately 0.05mm and 0.5mm; the second capillary tube (34; 134) may have an internal diameter of between approximately 0.13mm and 1mm.

It has been found that supplying water to the powder in the form of a jet, in laboratory scale granulators such as described above, rather than drop-by-drop, produces a far more homogeneous granulate having a much better size distribution of agglomerate.

In order to see the effects of the present invention, the examples described below were carried out. In particular, the granulator described with reference to Fig. 1 was compared against a known method and apparatus.

### EXAMPLE

The comparison granulator is similar to the granulator 10 described with reference to Fig. 1; however, the corresponding injector, associated fluid supply lines and pump were different. In particular the pump used was a 765 Dosimat sold by Metrohm, Switzerland with a 200ml burette, the fluid line between pump and injector was a 3mm internal diameter silicone tube and the outlet tube from the injector was a 2mm internal diameter metallic tube. Seven runs were completed, four using the comparison granulator and three using the granulator 10. 55g of dry powder formulation comprising 93% mannitol and 7% pre-gelatinized starch was used on each run. The dry formulation was mixed in a Turbula™ mixer for 20 minutes at 42 rpm. Water was added to the formulation through the injectors of each granulator at a constant flow rate of 1.1 g per minute. However, in the comparison granulator the water was added drop-by-drop, whereas in the granulator 10 water was added in the form of a continuous jet form. The power of the jet was such that it struck the powder formulation, penetrated a significant distance and is then dispersed; however the jet did not pass through the formulation and strike the bottom of the bowl 12.

The experimental quantities may range from approximately 0.02kg to 0.1kg for research purposes, with approximately 0.05kg to 0.06kg being preferred. Water or a pure solvent or a mixture of solvents may be added to the formulation at approximately 5-25% and often 10-20% by weight of the formulation. The active pharmaceutical ingredient is usually present in the formulation at approximately 1-40% by weight. Increasing the quantity of active ingredient in the example above would result in a corresponding decrease in the amount of the diluent, here the mannitol.

During each run the impeller and chopper of each granulator were driven at a constant speed. The torque required to maintain the speed of the impeller was recorded as a function of time. The run conditions are shown in Table 1 below.

**Table 1**

| Run | Pump system | Impeller speed | Chopper speed | Water amount |
|---|---|---|---|---|
| 1 | Dosimat | 1470 rpm | 2500 rpm | 18% |
| 2 | Dosimat | 1470 rpm | 2500 rpm | 20% |
| 3 | Dosimat | 1100 rpm | 2500 rpm | 20% |
| 4 | Dosimat | 1100 rpm | 2500 rpm | 16% |
| 5 | HPLC | 1470 rpm | 2500 rpm | 18% |
| 6 | HPLC | 1100 rpm | 2500 rpm | 16% |
| 7 | HPLC | 1100 rpm | 2500 rpm | 20% |

Each run took about from 8 to 10 minutes, during which time water was added continuously to achieve the % amount by weight of the formulation indicated in the final column in Table 1 above. At the end of each run the homogeneity of the granulate was checked visually and then the granulate was sieved to obtain a population distribution by size of agglomerate. The visual check revealed, in runs 1 to 4, non-homogeneous granulates comprising a number of large agglomerates surrounded by small agglomerates. By comparison the granulates formed in runs 5 to 7 were of a more homogeneous nature in terms of agglomerate size. At the start of the run the size of particles in the formulation was approximately 50-100µm; at the end of the run the size of particles was approximately 200µm.

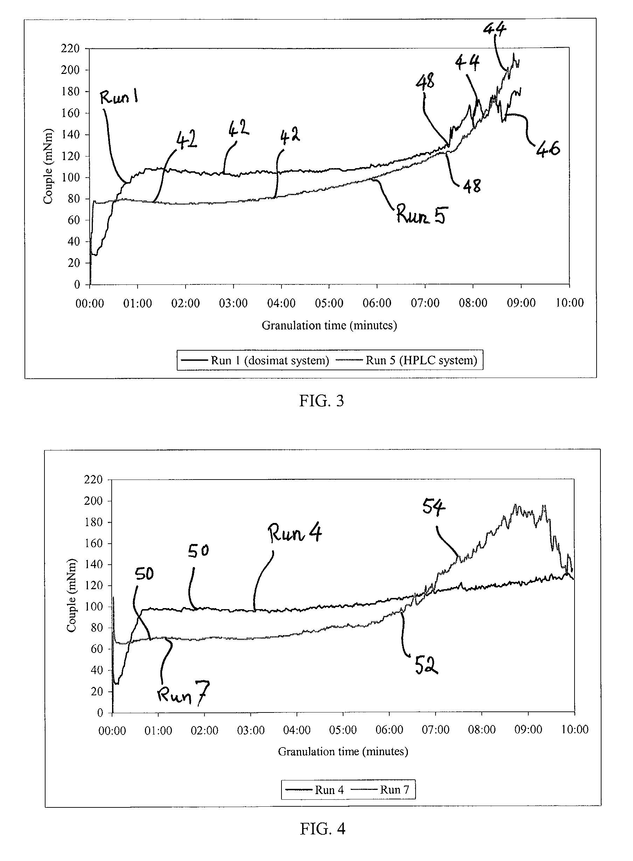

Fig. 3 shows a plot of torque (or couple) required to run the impeller at a constant speed against time for run 1 (drop-by-drop method) and run 5 (jet method). It will be seen that in run 5 the optimum phase of granulation, characterised by a relatively flat portion of the curve 42, was reached very quickly, whereas it took over a minute for the drop-by-drop method to reach optimum. As more water is added during the optimum phase the torque rises steadily until it reaches the over-wet phase 44 where the torque becomes slightly more erratic. However, using the jet method the granulate passes into the over-wet phase 44 more smoothly than the drop-by-drop method which is seen to pass suddenly into the over-wet phase 44. The over-wet phase of the drop-by-drop method is seen to be more noisy 46 than the same phase of the jet method; this is thought to be because large agglomerates form suddenly using the drop-by-drop method. These two runs took approximately the same time to reach the endpoint 48 of the granulation process i.e. just before the over-wet phase 46.

Referring to Fig. 4, torque and time are shown for run 4 and run 7 that used a lower impeller speed but a higher amount of water compared to runs 1 and 5 above. Again, granulation quickly reached the optimum phase 50 using the jet method. However, it is seen that the granulation process is finished quicker approximately at point 52 using the jet method than with the drop-by-drop method, which is still in optimum phase 50 when run 7 has reached over-wetting approximately at point 54. The distribution of liquid is therefore more effective in run 7 using the jet method.

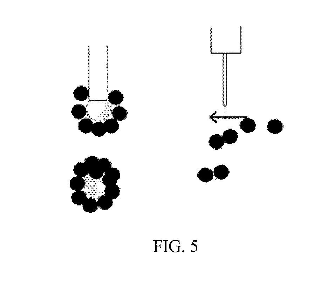

Fig. 5 is a schematic view of the outlet of the respective injectors of the comparison granulator and the granulator 10 in use. When the comparison granulator is first started the formulation is in powder form and completely dry. The impeller, rotating at relatively high speed, causes the formulation to be agitated in the bowl, some of which passes around the injector. Whilst each drop forms at the outlet, some of the formulation coats the drop as shown in Fig. 5. When the drop falls from the injector it is completely covered with formulation. Despite the action of the impeller and the chopper these drops are difficult to break up and tend to form large agglomerates without a proper mixing of the formulation. Thus the active ingredient of the formulation may not be uniformly distributed through the granulated formulation. This is undesirable. In contrast the continuous jet method helps to inhibit the water from becoming covered before it has left the outlet. When it reaches the main body of formulation in the bowl, the water is rapidly dispersed within the formulation powder. This reduces the likelihood of large agglomerates forming.

As alternative to the examples above, a pure solvent may be injected into the material. Alternatively, instead of adding binder as a powder to the formulation, a binder solution can be made up from either a pure solvent or water and injected. A plurality of jets may also be used.

## Claims

1. An apparatus (10; 100) for wet granulating comprising a vessel (12; 112) for holding a material to be granulated, means for agitating (16; 116) the material and a fluid supply means (32; 132) having an outlet (40; 140) for introducing fluid into the vessel (12; 112), the outlet (40; 140) having a size such that, at a flow rate of fluid suitable for granulating the material, fluid emerges from the outlet (40; 140) substantially in the form of a jet.

2. An apparatus as claimed in claim 1, wherein the outlet (40; 140) is located above the material to be granulated.

3. An apparatus as claimed in claim 1 or 2, wherein adjacent the outlet (40; 140) the jet of fluid forms an angle of approximately between 0 and 30° with the vertical.

4. An apparatus as claimed in claim 1, 2 or 3, wherein the fluid supply means comprises an injector (32; 132) having a first end connected to the proximal end of a first capillary tube (38; 138), the distal end of which forms said outlet (40; 140).

5. An apparatus as claimed in claim 4, wherein the first capillary tube (38; 138) has an internal diameter of between approximately 0.05mm and 0.5mm.

6. An apparatus as claimed in claim 4 or 5, wherein a second end of the injector (32; 132) is connected to a second capillary tube (34; 134) to provide a fluid path between a fluid source (36; 136) and said outlet (40; 140).

7. An apparatus as claimed in claim 6, wherein the second capillary tube (34; 134) has an internal diameter of between approximately 0.13mm and 1mm.

8. An apparatus as claimed in any preceding claim, further comprising a pump (36; 136) for urging fluid to said outlet (40; 140).

9. Injector apparatus for use with apparatus for wet granulating, which injector apparatus comprises means for mounting the injector apparatus on apparatus for wet granulating, and a fluid supply means (32; 132) having an outlet (40; 140) for delivering fluid into the apparatus for wet granulating, the outlet (40; 140) being such that, in use, at a flow rate suitable to granulate the material, fluid emerges substantially in the form of a jet.

10. Injector apparatus as claimed in claim 9, wherein the fluid supply means comprises an injector (32; 132) having a first end connected to the proximal end of a first capillary tube (38; 138), the distal end of which forms said outlet (40; 140).

11. Injector apparatus as claimed in claim 10, wherein the first capillary tube (38; 138) has an internal diameter of between approximately 0.05mm and 0.5mm.

12. Injector apparatus as claimed in claim 10 or 11, wherein a second end of the injector is connected to a second capillary tube (34; 134) to provide a fluid path between a fluid source (36; 136) and said outlet (40; 140).

13. Injector apparatus as claimed in claim 11, wherein the second capillary tube (34; 134) has an internal diameter of between approximately 0.13mm and 1mm.

14. A method of wet granulating comprising the steps of:
(1) placing a material to be granulated in a vessel (12; 112);
(2) mixing the material to be granulated; and
(3) supplying fluid to the material through an outlet (40; 140) at a flow rate suitable to granulate the material, the outlet being of a size such that fluid emerges substantially in the form of a jet.

15. A method as claimed in claim 14, further comprising the step of adding the fluid from above the material being mixed.

16. A method as claimed in claim 14 or 15, further comprising the step of adding the fluid as a jet with a force such that the jet does not penetrate through the material being granulated to contact the vessel.

17. A method as claimed in claim 14, 15 or 16, wherein the jetting is carried out substantially continuously until the desired quantity of fluid has been added to the material.
